Europäisches Patentamt

European Patent Office

Office européen des brevets

(11) Veröffentlichungsnummer: **0 563 677 A1**

## (12) EUROPÄISCHE PATENTANMELDUNG

(21) Anmeldenummer: **93104257.6**

(22) Anmeldetag: **16.03.93**

(51) Int. Cl.⁵: **H04M 3/30**

(30) Priorität: **31.03.92 DE 4210622**

(43) Veröffentlichungstag der Anmeldung:
**06.10.93 Patentblatt 93/40**

(84) Benannte Vertragsstaaten:
**AT BE CH DK ES FR GB GR IT LI LU NL SE**

(71) Anmelder: **SIEMENS AKTIENGESELLSCHAFT**
**Wittelsbacherplatz 2**
**D-80312 München(DE)**

(72) Erfinder: **Gnan, Günther, Dipl.-Ing.**

Föhrenstrasse 9
W-8038 Gröbenzell(DE)
Erfinder: **Kaiser, Wolfgang, Dipl.-Ing. (FH)**
Zwieselstrasse 23
W-8228 Freilassing(DE)
Erfinder: **Mertes, Wilbert, Dipl.-Ing. (FH)**
Leharstrasse 60
W-8900 Augsburg 21(DE)
Erfinder: **Schmutzler, Werner**
Asambogen 24b
W-8080 Fürstenfeldbruck(DE)

(54) **Prüfeinrichtung zum Prüfen einer Teilnehmeranschlussschaltung.**

(57) Eine Prüfeinrichtung (PEQ) zum Prüfen einer Teilnehmeranschlußschaltung (SLC) beinhaltet eine Leitungsnachbildungsimpedanz (ZN), die für die Messung der Gabelübertragungsdämpfung an die Teilnehmeranschlußleitung angeschaltet werden kann. Die Leitungsnachbildungsimpedanz ist digital einstellbar und kann dadurch mit Hilfe eines Mikrocomputers (MC) softwaremäßig auf unterschiedliche Teilnehmeranschlußleitungen eingestellt werden.

FIG 1

Bei der Entstörung einer Teilnehmeranschlußschaltung wird in der Vermittlungsstelle eine Prüfeinrichtung zur Lokalisierung der Fehlerstelle eingesetzt. Eine der Aufgaben der Prüfeinrichtung ist es, die Gabelübergangsdämpfung der Teilnehmeranschlußschaltung zu messen. Hierzu werden eine Sendeschaltung, eine Meßschaltung und eine Impedanz verwendet. Mit der Impedanz soll das Wechselstromverhalten der Teilnehmeranschlußleitung zum Teilnehmer mit Telefon und abgehobenem Handapparat nachgebildet werden. Die Impedanz muß hierzu auf die Werte der zu prüfenden Teilnehmeranschlußleitung eingestellt werden. Dadurch entsteht für die Hersteller der Prüfeinrichtung das Problem, bei Erweiterung des Kundenkreises Baugruppen mit den neu geforderten Impedanzen liefern zu müssen.

Es ist bekannt, die geforderten Impedanzen auf einer Baugruppe durch Einlegen von Lötbrücken im Prüffeld oder am Aufbauort auszuwählen. Wenn eine entsprechende Impedanz nicht vorhanden ist, muß deshalb eine neue Hardware-Variante entwikkelt werden.

Der Erfindung liegt das Problem zugrunde, den genannten Nachteil zu überwinden.

Durch die digitale Einstellbarkeit der Leitungsnachbildungsimpedanz ist es möglich, die Prüf-richtung in einfacher Weise auf die unterschiedlichsten Teilnehmeranschlußleitungen einzustellen.

Eine Ausführungsform der Erfindung ist durch Anspruch 2 angegegeben. Diese Ausführungsform besitzt insbesondere den Vorteil, daß die Prüf-richtung während des Betriebs der Vermittlungsstelle automatisch auf die bei der Prüfung der Teilnehmerschaltung jeweils vorliegende Teilnehmeranschlußleitung eingestellt werden kann.

Im folgenden wird die Erfindung anhand der Zeichnung naher beschrieben.

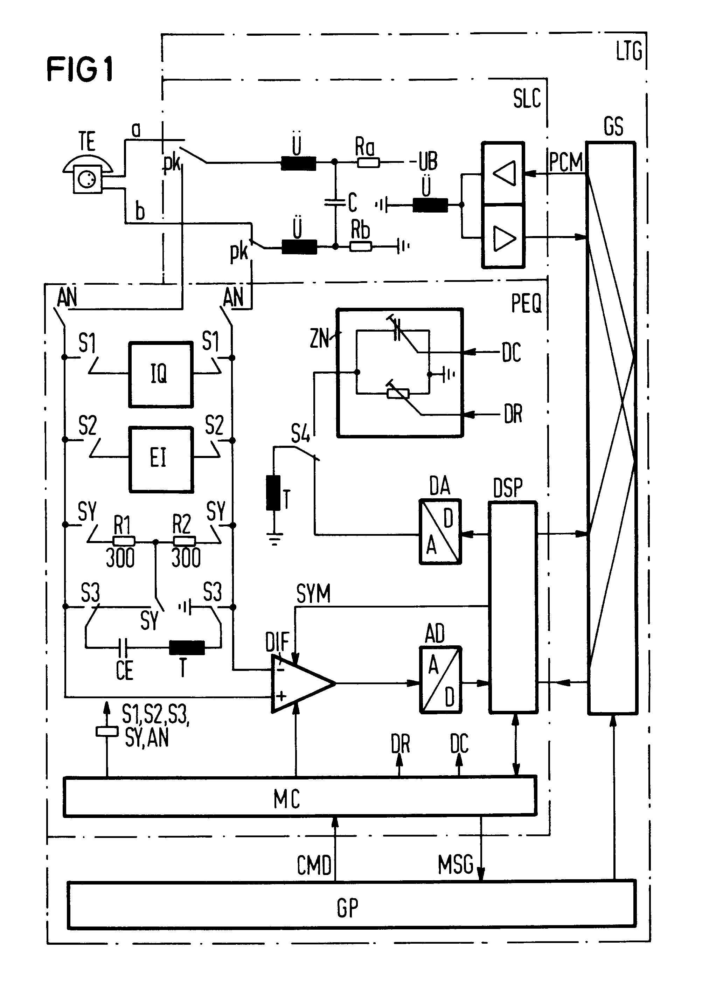

FIG 1 zeigt die Einbettung einer Prüfeinrichtung PEQ zur Prüfung einer Teilnehmerschaltung SLC innerhalb einer Anschlußgruppe LTG eines Vermittlungssystems.

Die Teilnehmerschaltung SLC umfaßt vereinfacht dargestellt Speisewiderstände Ra und Rb, über die eine Gleichspannung UB eingespeist wird, einen Übertrager Ü, der die Sprechwechselspannung von der Teilnehmeranschlußleitung a/b zum PCM- interface IN und umgekeht überträgt und einen Kondensator CE, der den Wechselstromkreis schließt. Das PCM-Interface bildet dabei den Übergang von der analogen Übertragungsseite zur digitalen Übertragungsseite. Auf der digitalen Übertragungsseite ist die Sprechwechelspannung in ihre gehenden und kommenden Anteile getrennt und nach dem PCM-Verfahren kodiert. Zu Prüfzwecken ist die digitale Seite der Teilnehmerschaltung über eine Koppeleinrichtung GS mit der Prüfeinrichtung verbindbar. Die analoge Seite der Teilnehmerschaltung ist zu Prüfzwecken durch Prüfkopplerkontakte Pk mit der Prüfeinrichtung verbindbar.

Die Prüfeinrichtung umfaßt verschiedene Relais, eine Konstantstromsenke IQ, einen Eichgenerator EI, eine symmetrische Toneinspeiseschaltung, eine Leitungsnachbildungsimpedanz ZN, einen Differenzverstärker DIF, einen Signalprozessor DSP mit vorgeschalteten Digital/Analog-Wandler DA sowie Analog/Digital-Wandler AD, und einen Mikrocomputer MC.

Die genannte symmetrische Toneinspeiseschaltung umfaßt Einspeisewiderstände R1 und R2, in deren Mitte hinter einem Kondensator CE ein Sendeübertrager T angeschaltet ist.

Der zweite Teil des Sendeübertragers T ist mit dem Digital/Analog-Wandler des Signalprozessors verbindbar.

Bei den genannten Relais der Prüfeinrichtung handelt es sich um ein Relais AN zur Anschaltung der Prüfeinrichtung an den Prüfling (Teilnehmerschaltung), ein Relais S1 zur Anschaltung der Konstantstromsenke, ein Relais S2 zur Anschaltung des Eichgenerators EI, ein Relais 3 zur Anschaltung des Sendeübertragers T, ein Relais S4 zur Umschaltung des Sendeübertragers T vom Digital/Analog-Wandler auf die Leitungsnachbildung ZN und ein Relais SY zur Anschaltung der symmetrischen Toneinspeiseschaltung.

Die Leitungsnachbildungsimpedanz ZN dient als Leitungsabschluß bei der Messung der Gabelübergangsdämpfung und ist durch die Signale DC und DR vom Mikrocomputer digital einstellbar.

Der Signalprozessor DSP realisiert sowohl den wesentlichen Teil einer Sendeschaltung zum Senden von Prüfsignalen, als auch den wesentlichen Teil einer Meßschaltung zum Messen von Meßsignalen und kann sowohl an die Analogseite der Teilnehmerschaltung SLC als auch über eine Koppeleinrichtung GS an die digitale Seite der Teilnehmerschaltung SLC angeschaltet werden. Für die Anschaltung an die analoge Seite der Teilnehmerschaltung sind dem Signalprozessor zum Senden ein Digital/Analog-Wandler DA und zum Empfangen ein Analog/DigitalWandler DA vorgeschaltet.

Die analoge Meßschaltung der Prüfeinrichtung wird vom Signalprozessor, dem Analog/Digital-Wandler AD und dem Differenzverstärker DIF gebildet. Der Differenzverstärker koppelt hierbei den Wechselspannungsanteil der Spannung zwischen a- und b-Ader aus und führt ihn über den Analog/Digital-Wandler dem Signalprozessor zur Auswertung zu.

Die analoge Sendeschaltung wird vom Signalprozessor, dem Digital/Analog-Wandler DA und dem Sendeübertrager T gebildet. Der Signalprozessor erzeugt ein Signal in digitaler Form, welches mit Hilfe des Digital/Analog-Wandlers in analoge Schwingungen umgewandelt wird und über den Sendeübertrager auf die Teilnehmeranschlußleitung eingespeist wird.

Die analoge Sendeschaltung kann zur Überwachung der internen Funktionstüchtigkeit der Prüfeinrichtung mit der analogen Meßschaltung in einem Eigenprüfungsmodus zusammengeschaltet werden.

Der Signalprozessor DSP mißt in seinem Empfangsteil den Effektivwert von Wechselspannungen und gibt diesen als Pegelwert in dB an den Mikrocomputer MC weiter. Die Wechselspannungen können von der Analogseite der Teilnehmerschaltung über den Analog-Digital-Wandler oder von der Digitalseite der Teilnehmerschaltung über die Koppeleinrichtung GS, die in Form eines PCM-Busses realisiert ist, empfangen werden.

Die von der Analogseite gemessenen Effektivwerte werden mit einem Meßkorrekturfaktor multipliziert, der die Toleranzen der analogen Bauteile berücksichtigt. Er wird dadurch ermittelt, daß vom Eichgenerator EI ein Eichsignal mit einem definierten Pegelwert gesendet und mit dem empfangenen Pegelwert ins Verhältnis gesetzt wird.

Der Signalprozessor erzeugt in seinem Sendeteil Prüfsignale, deren Frequenz und Pegel einstellbar sind. Sie können analog überden Digital/Analog-Wandler oder digital über den PCM-Bus GS zum Prüfling gesendet werden. Die zum Digital/Analog-Wandler gesendeten Prüfsignale werden mit einem Sendekorrekturfaktor multipliziert, der die Toleranzen der analogen Bauteile der Sendeschaltung berücksichtigt. Der Sendekorrekturfaktor wird dadurch ermittelt, daß von der analogen Sendeschaltung zu der bereits geeichten analogen Meßschaltung ein Eichsignal mit einem definierten Pegelwert gesendet und mit dem empfangenen Pegelwert ins Verhältnis gesetzt wird.

Zur Realisierung von Sinusschwingungen ist in der Software für den Signalprozessor ein Prozeß implementiert, der Amplitudenwerte über eine Potenzreihe berechnet. Dies ergibt Momentanwerte eines Sinussignals der vorgegebenen Frequenz. Durch das Abtastverfahren treten bei der Umwandlung in eine analoge Schwingung frequenzabhängige Verzerrungen auf. Deshalb wird in einem weiteren Rechenschritt der Amplitudenwert korrigiert.

Der Mikrocomputer MC steuert die Prüfeinrichtung und erhält dazu von der Prüfsoftware der Gruppensteuerung GP über entsprechende Kommandos CMD Meßaufträge und sendet über entsprechende Meldungen MSG die Meßergebnisse wie derum an die Gruppensteuerung der Anschlußgruppe LTG zurück. Zum Messen stellt der Mikrocomputer die Relais S1, S2, S3, S4, SY und AN der Prüfeinrichtung PEQ entsprechend ein und aktiviert den Signalprozessor DSP. Dabei wird das zum Messen vom Signalprozessor benötigte Programm vom Mikrocomputer in den Arbeitsspeicher des Signalprozessors geladen. Dadurch wird es ermöglicht, daß das Steuerprogrmam für den Mikrocomputer und die Signalprozeß-Programme für den Signalprozessor in einem zentralen EPROM untergebracht werden können. Bei einem Wechsel der Firmware muß daher nur ein Baustein ausgetauscht werden. Zudem verringern sich die Kosten, da der Signalprozessor wegen seiner hohen Taktrate schnelle und daher teure EPROM benötigt würde.

Gemäß einem vorgegebenen Zeitraster veranlapt der Mikrocomputer MC einen Meßvorgang zum Messen der Gabelübergangsdämpfung. Er veranlaßt hierzu die Anschaltung der Leitungsnachbildungsimpedanz durch Ansteuerung des Relais S4 und ändert gegebenenfalls die Leitungsnachbildungsimpedanz entsprechend der zu prüfenden Teilnehmeranschlußschaltung. Danach veranlaßt der Mikrocomputer den Signalprozessor DSP zur Aussendung eines Prüfsignals zur digitalen Empfangsseite der Teilnehmeranschlußschaltung sowie zum Empfang des Übergangssignals von der digitalen Sendeseite der Teilnehmeranschlußschaltung. Der Signalprozessor berechnet aus dem empfangenen Übergangssignal die vorliegende Gabelübergangsdämpfung und übergibt dieses Ergebnis wiederum dem Mikrocomputer. Damit ist die Messung der Gabelübergangsdämpfung abgeschlossen.

Zur Überwachung der Einstellbarkeit bzw. Funktionstüchtigkeit der Leitungsnachbildungsimpedanz ist der Eichgenerator in einem Eigenprüfmodus an die Leitungsnachbildungsimpedanz über die Relais S1 und S4 anschaltbar. Durch die Messung der sich am Eingang des Differenzverstärkers DIF während des Eigenprüfmodus einstellenden Potentiale kann der tatsächlich vorliegende Wert der Leitungsnachbildungsimpedanz mit dem digital eingestellten Sollwert verglichen und somit die Leitungsnachbildungsimpedanz überwacht werden.

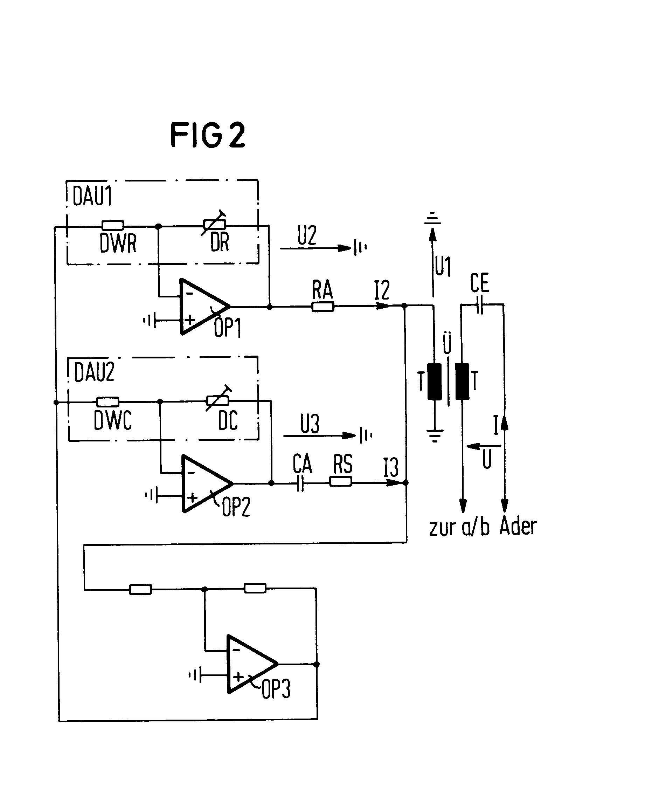

FIG 2 zeigt ein Ausführungsbeispiel der digital einstellbaren Impedanz ZN. Die digital einstellbare Impedanz wird an die a/b-Ader des Teilnehmersatzes geschaltet, wobei sich bei anliegender Spannung U der Strom I nach dem ohmschen Gesetz mit $I = U/Z_{ZN}$ einstellt. Die Impedanz ZN läßt sich über die beiden Digital-Analog-Umsetzer DAU1 und DAU2 nach Resistanz und Reaktanz bzw. Betrag und Phase getrennt vorwählen. Durch die kapazitive Ankopplung über $C_E$ wirkt die Impedanz nur auf den Wechselanteil der Spannung U, während der Meßübertrager Ü die galvanische Trennung der Anordnung von der a/b-Ader und damit eine einfache erdbezogene Einstellung ermöglicht. Der einstellbare Teil der Impedanz wird aus den Grundwerten RA für die Resistanz und CA für die Reaktanz gebildet. Die Wirkung von RA und CA kann über Rückkopplung der Spannung U1 am Ausgang der Bauteile auf deren Eingang mit U2 und U3 verändert werden. Dabei fließen Ströme durch die Bauteile, die durch folgende Gleichungen beschrieben werden:

$$I2 = (U1 - U2)/RA; \quad I3 = (U1 - U3)/XA$$

Die wirkende Resistanz R berechnet sich damit aus

$$R = U1/I2 = U1*RA/(U1-U2) = RA/(1-U2/U1) \; |Ohm|.$$

Die wirkende Reaktanz X berechnet sich damit aus

$$X = U1/I3 = U1*XA/(U1-U3) = XA/(1-U3/U1) \; |Ohm|.$$

wobei

$$XA: = RS + 1/j\omega \cdot CA \text{ mit } \omega = 2 \cdot \pi \cdot f$$

gilt.

R und X stellen virtuelle Bauteile dar, deren Werte vom Verhältnis U2/U1 bzw. U3/U1 bestimmt werden. Die Bedingung $0 \leq U2/U1 \leq 1$ liefert $RA \leq R \leq$ unendlich. Bei U2/U1 = 0 wird R = RA, bei U2/U1 = 1 wird R = unendlich. Analoges gilt für U3/U1.

Das Verhältnis von U2/U1 kann im Rückkopplungszweig mit DAU1 und das von U3/U1 mit DAU2 eingestellt werden.

Die Rückkopplungszweige sind jeweils aus zwei Stufen aufgebaut. Die erste Stufe mit OP1 bzw. OP2 führt den Grundwerten RA bzw. CA die Spannung U1 am anderen Anschluß der Bauteile gleichphasig wieder zu. Dies erfolgt durch die Spannungen U2 bzw. U3. Die Verstärkung von U2 und U3 läßt sich mit DAU1 und DAU2 digital einstellen. Mit dieser digitalen Schnittstelle ist ein Zugang zur Software geschaffen, die dadurch je nach Einsatzfall verschiedene Rückkopplungsfaktoren vorwählen kann. DAU1 und OP1 bzw. DAU2 und OP2 bilden invertierende Verstärker, die die Phase der Spannung U1 um 180 Grad drehen würden. Um Gleichphasigkeit zwischen U1 und U2 bwz. U3 zu erreichen, wird die Phase von U1 durch eine weitere invertierende Verstärkerstufe mit OP3 erneut um 180 Grad gedreht. Der Zusammenhang zwischen U1 und U2 bzw. U3 wird durch U2 = U1·(DR/DWR) und U3 = U1(DC/DWC) beschrieben, dies entspricht einer Mitkopplung. Um die Schaltung stabil zu halten, muß hierbei der Mitkoppelfaktor kleiner als 1 sein. Mit dem Einstellbereich von $0 \leq D/DW \leq 4095/4096$ ist dies gewährleistet.

**Patentansprüche**

1. Prüfeinrichtung zum Prüfen einer Teilnehmeranschlußschaltung, die folgende Merkmale umfaßt:

a) eine Sendeschaltung zum Senden von Prüfsignalen zu der Teilnehmeranschlußschaltung,
b) eine Meßschaltung zum Empfangen von durch die Prüfsignale bedingten Antwortsignalen von der Teilnehmeranschlußschaltung,
c) eine Leitungsnachbildungsimpedanz (ZN) zum Zwecke der Nachbildung einer Teilnehmeranschlußleitung bei Schleifenschluß,
d) Schaltmittel (S3, S4) zur Anschaltung der Leitungsnachbildungsimpedanz an die Teilnehmeranschlußleitung,
**dadurch gekennzeichnet**, daß die genannte Leitungsnachbildungsimpedanz digital einstellbar ist.

2. Prüfeinrichtung gemäß Anspruch 1, **gekennzeichnet** durch einen Mikrocomputer (MC), der die Prüfeinrichtung steuert und insbesondere die genannte Leitungsnachbildungsimpedanz einstellt.

3. Prüfeinrichtung gemäß Anspruch 2, **gekennzeichnet** durch einen Signalprozessor (DSP) der den digitalen Teil der Sende- und Meßschaltung bildet und von dem Mikrocomputer mit den entsprechenden Meßprogrammen versorgt wird.

4. Prüfeinrichtung gemäß Anspruch 1, **gekennzeichnet** durch einen Eichgenerator (EI), der zum Zwecke der Überwachung der Leitungsnachbildungsimpedanz an diese angeschaltet werden kann.

FIG 1

# FIG 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X<br>Y | EP-A-0 303 142 (SIEMENS)<br>* Spalte 5; Abbildung 8 *<br>--- | 1-3<br>4 | H04M3/30 |
| A | PATENT ABSTRACTS OF JAPAN<br>vol. 007, no. 194 (E-195)24. August 1983<br>& JP-A-58 094 259 ( NIPPON DENSHIN DENWA KOSHA )<br>* Zusammenfassung *<br>--- | 1 | |
| Y | US-A-4 620 069 (GODWIN ET AL.)<br>* Spalte 17, Zeile 35 - Spalte 18, Zeile 28; Abbildungen 1,2,5 *<br>--- | 4 | |
| A | IEEE TRANS. ON COMMUNICATIONS, VOL. COM-29,<br>Nr. 10, Oktober 1981, NEW YORK, US<br>Seiten 1434 - 1441<br>T.A.HANRAHAN<br>* Abbildung 5 *<br>--- | 4 | |
| A | DE-A-3 535 411 (NEUMANN)<br>* Zusammenfassung *<br>* Abbildung 1 *<br>--- | 1-4 | RECHERCHIERTE SACHGEBIETE (Int. Cl.5 ) |
| A | EP-A-0 465 089 (AT&T)<br>* Abbildungen 2,3 *<br>----- | 1-3 | H04M |

Der vorliegende Recherchenbericht wurde für alle Patentansprüche erstellt

| Recherchenort | Abschlußdatum der Recherche | Prüfer |
|---|---|---|
| DEN HAAG | 17 JUNI 1993 | KURVERS F.J.J. |